# EUROPEAN PATENT APPLICATION

(11) **EP 1 475 627 A2**
(43) Date of publication of application: **10.11.2004**
(21) Application number: 04010474.7
(22) Date of filing: 03.05.2004
(51) Int. Cl.: G01N 21/88, G06T 7/00

(54) **Machine vision inspection system and method**

(30) Priority: 07.05.2003 US 435625
(71) Applicant: Mitutoyo Corporation, Kanagawa 213-0012 (JP)
(72) Inventor: Gladnick, Paul G., Seattle Washington 98103 (US); Wasserman, Richard M., Kirkland Washington 98033 (US); Saylor, Barry E., Kent Washington 98031 (US); Delaney, Mark L., Shoreline Washington 98133 (US)
(74) Representative: Grünecker, Kinkeldey, Stockmair & Schwanhäusser Anwaltssozietät

(57) **Abstract**

A precision machine vision inspection system and method for increased inspection throughput. The vision inspection system includes a movable stage for scanning and measuring selected workpiece features. In prior systems, conventional interspersing of image processing and inspection operations with image acquisition operations required stopping and starting the stage motion during image acquisition, necessitating associated delays or wait-states in various operations. Such delays are avoided in this invention by acquiring images continuously, with a timing that is independent of image inspection operations, so that delays and wait-states are avoided. In addition, continuous stage motion is combined with a strobe lighting feature during the image acquisition operations to acquire blur-free images at a high rate. Improved image acquisition and image analysis routines including these features are created and stored by the system.

## Description

### FIELD OF THE INVENTION

The invention relates generally to methods for operating a machine vision inspection system with a camera and stage that are movable relative to one another in multiple directions so as to scan and inspect selected features of a workpiece on the stage, and more particularly to systems and methods for programming and performing image acquisition operations independently of image inspection operations, and systems and methods for performing image acquisition operations using continuous motion, in order to improve precision machine vision inspection system throughput.

### BACKGROUND OF THE INVENTION

Precision machine vision inspection systems can be utilized to obtain precise dimensional measurements of inspected objects and to inspect various other object characteristics. Such systems may include a computer, a camera and optical system, and a precision stage that is movable in multiple directions so as to allow the camera to scan the features of a workpiece that is being inspected. One exemplary prior art system that is commercially available is the QUICK VISION^{TM} series of vision inspection machines and QVPAK^{TM} software available from Mitutoyo America Corporation (MAC), located in Aurora, IL. The features and operation of the QUICK VISION^{TM} series of vision inspection machines, and the QVPAK^{TM} software are generally described, for example, in the QVPAK 3D CNC Vision Measuring Machine Users Guide, published January 2003 and the QVPAK 3D CNC Vision Measuring Machine Operation Guide, published September 1996, each of which is hereby incorporated herein by reference in their entirety. This product, as exemplified by the QV-302 Pro model, for example, is able to use a microscope-type optical system to provide images of a workpiece at various magnifications, and move the stage as necessary to traverse the workpiece surface beyond the limits of any single video image. A single video image typically encompasses only a portion of the workpiece being observed or inspected, given the desired magnification, measurement resolution and physical size limitations of such systems.

Visions systems such as QUICK VISION^{TM} are generally designed to facilitate precision industrial inspection. Such systems frequently include a lens turret with lenses of various magnifications. It is common to inspect various aspects of a single object, also referred to as a workpiece or an inspection workpiece herein, using the various magnifications. Furthermore, in industrial inspection environments, very large inspection objects, or sets of objects, are common, and dimensions to be measured often extend beyond a single field of view. Consequently, for precision inspection of relatively large objects, it is necessary to move the stage a significant number of times to inspect the entire object.

Another example of a vision system utilizing a microscope is shown in U.S. Patent No. 5,677,709. The system of the '709 patent teaches a joystick which controls a micromanipulator which is used to three dimensionally position a workpiece in the field of view of the microscope. The system can be operated in dual joystick control modes, a speed control mode and a position control mode, for moving a stage in multiple directions to inspect relatively small objects.

Machine vision inspection systems also generally utilize automated video inspection. U.S. Patent No. 6,542,180 teaches a vision system utilizing automated video inspection, including operations in which the lighting of a workpiece feature is adjusted based on a plurality of selected regions of an image of the workpiece feature. As taught in the '180 patent, automated video inspection metrology instruments generally have a programming capability that allows an automatic inspection event sequence to be defined by the user for each particular workpiece configuration. This can be implemented either in a deliberate manner, such as text-based programming, for example, or through a recording mode which progressively "learns" the inspection event sequence by storing a sequence of machine control instructions corresponding to a sequence of inspection operations performed by a user, or through a combination of both methods. Such a recording mode is often referred to as "learn mode" or "training mode". For a variety of machine vision inspection systems it is conventional that image acquisition operations are interspersed with image analysis operations and/or feature inspection operations that are performed on the most recently acquired image. In either mode, the machine control instructions are generally stored as a part program that is specific to the particular workpiece configuration. The ability to create part programs with instructions that perform a predetermined sequence of inspection operations provides several benefits, including enhanced inspection repeatability, as well as the ability to automatically execute the same part program on a plurality of compatible machine vision inspection systems and/or at a plurality of times. Additionally, the programming capability provides the ability to archive the results of the various inspection operations.

While the above machine vision inspection systems provide advantages such as automated video inspection, it would be desirable to improve the throughput of such systems.

So called "on-line" or "in-line" machine vision inspection systems are also known. Such systems are often specifically designed for high throughput, and include strobe lighting illumination, and the like. However, such systems typically consist of a specific vision system configuration directed toward defect detection and the like, rather than a flexible vision system configuration directed toward precision dimensional inspection and the like. Thus, such high-speed on-line systems do not include precision stages, or precision motion control systems and the like. Rather, such systems typically observe objects on streaming or controllable conveyor belts, streaming webs, and the like. Only relatively crude levels of positioning and dimensional measurement accuracy are provided by such on-line systems. Accordingly, the specific throughput problems associated with providing precision imaging in combination with precision motion control, have not been addressed by such on-line systems, and such systems are deficient in this regard.

A precision machine vision inspection system that can overcome the foregoing problems and limitations, individually or in combination, is desirable. The present invention is directed to a machine vision inspection system and method for programming and performing image acquisition operations independently of related image inspection operations, and using continuous motion during image acquisition operations, in order to improve the throughput of certain precision machine vision inspection systems.

### SUMMARY OF THE INVENTION

A machine vision inspection system and method is provided for increasing the overall machine vision inspection system throughput of certain precision machine vision inspection operations. In particular, in various exemplary embodiments the method includes performing a set of image acquisition operations for a workpiece with a timing that is independent of the timing of related image inspection operations for the workpiece. In various exemplary embodiments the method further includes using continuous motion during image acquisition operations.

In various exemplary embodiments, the image acquisition operations that have a timing that is independent of the timing of the related image inspection operations include the operations that configure the machine vision inspection system for proper acquisition of the various workpiece inspection images, such as various motion and/or positioning operations, lens configuration operations, lighting configuration operations and lighting strobe operations, as well as the actual acquisition and storage of the set of workpiece inspection images.

In various exemplary embodiments, the operations that configure the machine vision inspection system for proper acquisition of the various workpiece inspection images are executed sufficiently rapidly that at least some of the set of images are acquired while maintaining a significant relative motion velocity of the machine vision inspection system prior to or during the image acquisition. In such exemplary embodiments, one or more light sources of the machine vision inspection system include a light source strobing capability that includes control of the strobe power level, the strobe exposure start time and the strobe exposure duration for a workpiece inspection image. Accordingly, the strobe exposure start time can effectively control the precise location of an inspection image relative to an expected workpiece feature location. The strobe exposure duration can be significantly shorter than an inherent minimum exposure time of a camera of the machine vision inspection system. Thus, the strobe power level and strobe duration for an inspection image are chosen to provide sufficient illumination and to reduce motion blur such that the precision measurement and inspection operations to be performed on the set of workpiece images can be performed with a precision and repeatability that is well within the related inspection feature tolerances of the workpiece, despite continuous motion during image acquisition.

The system includes a precision stage that is movable in multiple directions for scanning, measuring and inspecting selected features of a workpiece. In prior precision machine vision inspection systems that have been capable of determining locations and measurements to a precision on the order of 10 microns, 5 microns, or 1 micron or less, it has been conventional to stop the relative motion of the stage and camera each time an inspection image was taken, so as to avoid blurring the images of edges and surfaces and the like, that must be precisely located and/or measured in the image.

It should also be appreciated that for conventional precision machine vision inspection systems it has also been conventional to program such systems using conventional "learning" or "training" mode methods, which are essentially sequential operation recording systems. Such systems typically stop the relative motion between the camera and the stage or workpiece prior to acquisition of each inspection image because conventional learning or training mode operations frequently require user decision-making and or intervention in order to customize and verify a variety of inspection operations. Thus, conventional learning or training mode systems have inherently recorded image acquisition motion paths and motion profiles corresponding to a sequence of operations that stop the motion to acquire an inspection image and next perform the related image processing operations on an image acquired at the "stopped" location.

With respect to precision machine vision inspection system throughput, the inventors have determined that there are a number of problems with interspersing intermittent precision inspection operations for a workpiece image with precision image acquisition operations for a workpiece. One major problem with interspersing intermittent precision inspection operations with precision image acquisition operations is that for many of the practical, flexible and economical PC-based machine vision inspection systems that are preferred by the users, it is difficult, impractical, or impossible, to reliably carry out such intermittent precision inspection operations while continuing to carry out precision image acquisition operations at a high rate. This is particularly true considering that the various timings of the limitless number of possible combinations of image processing operations, inspection operations, I/O operations, and computations and the like, that are possible with such flexible systems, are difficult or impossible to control and/or predict. Thus, intermittent stopping and starting of the relative motion between the camera and the stage or workpiece is effectively required for such systems when interspersing intermittent precision inspection operations with precision image acquisition operations.

The inventors have also determined that intermittent stopping and starting of the relative motion between the camera and the stage or workpiece is particularly problematic for precision machine vision inspection systems. As one example, rapidly decelerating and/or stopping the relative stage motion inevitably induces a machine vibration that is significant for precision imaging and precision measurement. Such machine vibration may actually slightly distort the frame of a typical machine vision inspection system and alter the expected dimensional relationship between the stage, the workpiece, the camera, and the position encoders of the system. Thus, a significant "vibration settling time" must be allowed after the motion is "stopped" and before taking a precision workpiece inspection image. (The vibration settling time may also be referred to as a settling time, a mechanical settling time, or a mechanical latency, herein.) Such a settling time may be on the order of 10's of milliseconds, or 100's of milliseconds, or even more, for various mechanical systems and various required precision levels. In many cases it is not practical to significantly reduce or eliminate this settling time. Furthermore, is it is not practical to precisely characterize the settling time with respect to all possible operating conditions. Thus, for the most reliable and precise operation, a worst case settling time must repeatedly be assumed and allowed for prior to any precision image acquisition.

The inventors have determined that such repeated worst case settling time allowances cause significant overall inspection throughput delays in conventional precision machine vision inspection systems. It should be appreciated that such worst case settling time allowances are substantially reduced or eliminated by performing a set of image acquisition operations for a workpiece with a timing that is independent of the timing of related image inspection operations, according to the principles of this invention. When image acquisition operations for a workpiece have a timing that is independent of the timing of related image inspection operations, the unpredictable timing and duration of the related image inspection operations need not affect, or be considered during, the image acquisition operations. Accordingly, in various exemplary embodiments, the workpiece inspection image acquisition operations are separately performed at the highest practical rate allowed by the motion control system in combination with the achievable image exposure time, in a significantly shorter time than equivalent operations could be safely and reliably performed according to conventional interdependent and/or interspersed timing configurations and methods. The related image inspection operations are then performed separately at the highest, respective, practical rate. For at least these reasons, the total time to inspect a workpiece is reduced.

Thus, in accordance with one aspect of the present invention, image acquisition operations for a workpiece have a timing that is independent of the timing of related image inspection operations, such that the timing and duration of the related image inspection operations need not affect, or be considered during, the image acquisition operations.

In accordance with another aspect of the present invention, the image acquisition operations are performed sequentially and without interruption, at the highest practical rate.

In accordance with another aspect of the present invention, the settling time delays are avoided by performing a set of image acquisition operations for a workpiece while continuing to move the stage while images of the workpiece are taken. A strobe lighting system is utilized to assist with the acquisition of images without blurring. In other words, by using a high intensity, short duration burst of illumination, the workpiece is effectively "frozen" with respect to the camera and an image that supports precision inspection operations is provided.

In accordance with a further aspect of the present invention, the image acquisition operations for a workpiece are performed while continuing to move the stage at a constant velocity while an image of the workpiece is taken.

In accordance with a separate aspect of the present invention, an existing precision machine vision inspection system is retrofitted with a strobe lighting system usable according to the principles of this invention and subsequently operated using methods according to the principles of this invention.

In accordance with another aspect of the present invention, the image acquisition operations are programmed independently of the programming of the related image inspection operations and the related image inspection operations are programmed exclusively using recalled images.

In accordance with another aspect of the invention, an initial motion path and image acquisition routine is determined and stored by the system controller for acquiring a set of desired images of the workpiece. The motion path and image acquisition routine begins with the selection of a desired number of workpiece features to inspect and the associated magnifications for the features. A set of target positions that cumulatively include all of the selected workpiece features is then determined for the set of images. Next, a set of motion speeds, dummy positions, and lighting vectors are determined for the set of images. The lighting vectors include source selection and specifications regarding the strobe timing for the selected images. In one embodiment, these motion plan and image acquisition operations may be first stored and later recalled when the images are to be acquired. For acquiring the images, in various exemplary embodiments the image acquisition parameters are set and the machine moves to and continues through the respective target position for each respective image, and each respective image is acquired as the target position is traversed.

In accordance with another aspect of the invention, the system controller also learns and stores an inspection image recall and analysis routine. The image recall and analysis routine begins with entering a learning mode and then each desired inspection image of the set of workpiece inspection images is recalled. An inspection operation sequence is then determined for each feature to be inspected in each of the recalled images. Image analysis and/or feature analysis is performed for each region of interest, and the image/feature analysis operations are learned and may be executed and/or recorded. The image inspection results may also be stored and/or output by the system. These processes are repeated until the last region of interest in the last recalled image has been selected and analyzed, after which the learning mode ends and the recorded image recall operations and image analysis operations are stored as an operable image recall and analysis routine for the workpiece.

The inspection operation sequence is recorded as a series of machine control instructions in the inspection image recall and analysis routine. The inspection operation sequence may be determined automatically, semi-automatically, or manually. In various exemplary operations, the inspection operation sequence is determined and/or programmed with the aid of a graphical user interface. In various other exemplary embodiments, the inspection operation sequence may be programmed directly using text-based programming methods, or commercially available programming tools such as Visual Basic^{TM}, or the like.

In accordance with another aspect of the invention, when a workpiece is to be evaluated, the system controller recalls the motion path and image acquisition routine for the workpiece, and also recalls the image recall and analysis routine for the workpiece, then runs the respective routines independently, that is, in a way that allows the timings of their respective operations to be independent, and then stores and/or outputs the results of the image recall and analysis routine. In one exemplary embodiment, the respective routines are run sequentially.

In another exemplary embodiment, the image recall and analysis routine is delayed until a portion of the motion path and image acquisition routine has been executed, such that a sufficient number of workpiece inspection images have been acquired and stored, such that it is certain that additional operations of the motion path and image acquisition routine will be completed before the image recall and analysis routine will request the associated images. For example, in various embodiments, the image recall and analysis routine delay may be based on routine execution times that can be determined or known based on trial runs of the routines, and/or known characteristics of the system controller and/or host operating system, and/or one or more messages sent from the motion path and image acquisition routine to the image recall and analysis routine during execution of the routines. In such embodiments the two routines may thus be run partially concurrently, and at least the motion path and image acquisition routine will still have a timing that is independent of the timing of related image inspection operations for the workpiece, according to the principles of this invention.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a diagram of a machine vision inspection system;
FIGURE 2 is a diagram of a control system portion and a vision components portion of a machine vision inspection system;
FIGURE 3 is a diagram of one exemplary workpiece feature analysis/inspection tool usable in a machine vision inspection system to determine the location or position of an edge or boundary in a workpiece image;
FIGURE 4 is a flow diagram illustrating the determination of a motion path and image acquisition routine for a workpiece;
FIGURE 5 is a flow diagram illustrating the determination of an image recall and analysis routine for a workpiece;
FIGURE 6 is a flow diagram illustrating a routine for running the motion path and image acquisition routine and the image recall and analysis routine for a workpiece; and
FIGURE 7 is a schematic block diagram of one exemplary strobe synchronization control configuration usable in the control system portion shown in FIGURE 2.

### DETAILED DESCRIPTION OF THE PREFERRED EMBODIMENT

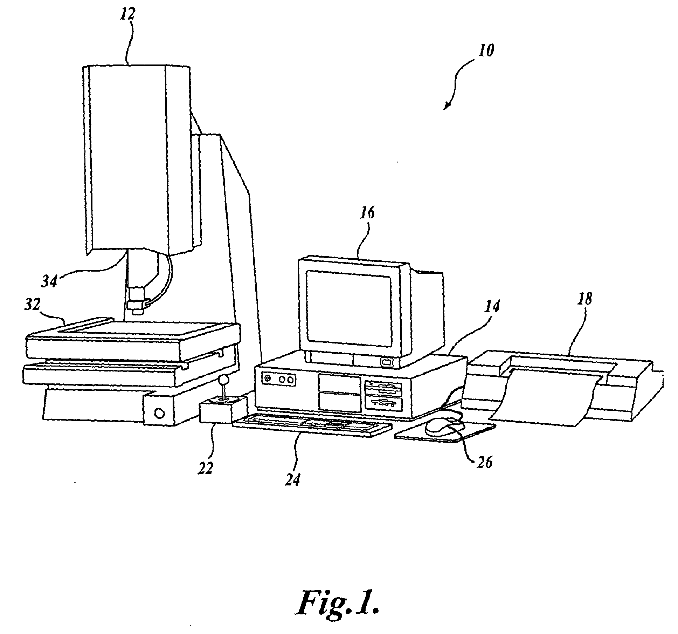

FIGURE 1 is a block diagram of one exemplary machine vision inspection system 10 in accordance with the present invention. The machine vision inspection system 10 includes a vision measuring machine 12 that is operably connected to exchange data and control signals with a controlling computer system 14. The controlling computer system 14 is further operably connected to exchange data and control signals with a monitor 16, a printer 18, a joystick 22, a keyboard 24, and a mouse 26. The vision measuring machine 12 includes a moveable workpiece stage 32 and an optical imaging system 34 which may include a zoom lens or interchangeable lenses. The zoom lens or interchangeable lenses generally provide various magnifications for the images provided by the optical imaging system 34.

The joystick 22 can typically be used to control the movement of the movable workpiece stage 32 in both the X and Y directions, which are generally parallel to the focal planes of the optical imaging system 34, and the movement direction component of the movable optical imaging system 34 in the Z or focus direction. Frequently, the deflection that controls the Z axis is a rotary deflection component of a handle or knob of the joystick 22. The joystick 22 may be provided in a form other than that shown, such as any visual representation or widget on the monitor 16 which is intended to function as a "virtual motion control device" of the machine vision inspection system 10 and is controllable through any computer input device such as the mouse 26 or the like.

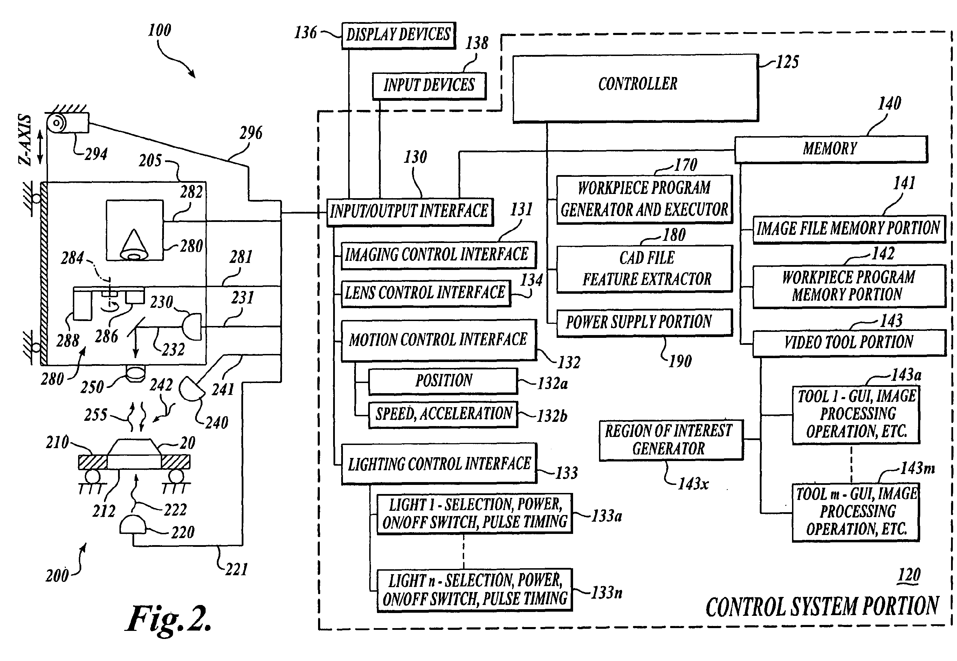

FIGURE 2 is a diagram of a control system portion 120 and a vision components portion 200 of a machine vision inspection system 100 in accordance with the present invention. As will be described in more detail below, the control system portion 120 is utilized to control the vision components portion 200. The vision components portion 200 includes an optical assembly portion 205, light sources 220, 230 and 240, and a workpiece stage 210 having a central transparent portion 212. The workpiece stage 210 is controllably movable along X and Y axes that lie in a plane that is generally parallel to the surface of the stage where a workpiece 20 may be positioned. The optical assembly portion 205 includes a camera system 260, an interchangeable objective lens 250, a turret lens assembly 280, and the coaxial light source 230. The optical assembly portion 205 is controllably movable along a Z axis that is generally orthogonal to the X and Y axes, by the using a controllable motor 294, as described further below.

A workpiece 20 that is to be imaged using the machine vision inspection system 100 is placed on the workpiece stage 210. One or more of the light sources 220, 230 and 240 emits source light 222, 232, or 242, respectively, that is usable to illuminate the workpiece 20. Light emitted by the light sources 220, 230 and/or 240 illuminates the workpiece 20 and is reflected or transmitted as workpiece light 255, which passes through the interchangeable objective lens 250 and the turret lens assembly 280 and is gathered by the camera system 260. The image of the workpiece 20, captured by the camera system 260, is output on a signal line 262 to the control system portion 120.

The light sources 220, 230, and 240 that are used to illuminate the workpiece 20 can include a stage light 220, a coaxial light 230, and a surface light 240, such as a ring light or a programmable ring light, all connected to the control system portion 120 through signal lines or busses 221, 231 and 241, respectively. As a primary optical assembly of the machine vision inspection system 100, the optical assembly portion 205 may include, in addition to the previously discussed components, other lenses, and other optical elements such as apertures, beamsplitters and the like, such as may be needed for providing coaxial illumination, or other desirable machine vision inspection system features. As a secondary optical assembly of the machine vision inspection system 100, the turret lens assembly 280 includes at least a first turret lens position and lens 286 and a second turret lens position and lens 288. The control system portion 120 rotates the turret lens assembly 280 along axis 284, between at least the first and second turret lens positions, through a signal line or bus 281.

The distance between the workpiece stage 210 and the optical assembly portion 205 can be adjusted to change the focus of the image of the workpiece 20 captured by the camera system 260. In particular, in various exemplary embodiments of the machine vision inspection system 100, the optical assembly portion 205 is movable in the vertical Z axis direction relative to the workpiece stage 210 using a controllable motor 294 that drives an actuator, a connecting cable, or the like, to move the optical assembly portion 205 along the Z axis. The term Z axis, as used herein, refers to the axis that is intended to be used for focusing the image obtained by the optical assembly portion 205. The controllable motor 294, when used, is connected to the input/output interface 130 via a signal line 296.

As shown in FIGURE 2, in various exemplary embodiments, the control system portion 120 includes a controller 125, an input/output interface 130, a memory 140, a workpiece program generator and executor 170, a CAD file feature extractor 180, and a power supply portion 190. It will be appreciated that each of these components, as well as the additional components described below, may be interconnected by one or more data/control buses and/or application programming interfaces, or by direct connections between the various elements.

The input/output interface 130 includes an imaging control interface 131, a motion control interface 132, a lighting control interface 133, and a lens control interface 134. The motion control interface 132 includes a position control element 132a, and a speed/acceleration control element 132b. However, it should be appreciated that in various exemplary embodiments, such elements may be merged and/or indistinguishable. The lighting control interface 133 includes light control elements 133a-133n which control, for example, the selection, power, on/off switch, and strobe pulse timing if applicable, for the various corresponding light sources of the machine vision inspection system 100, such as the light sources 220, 230, and 240.

The memory 140 includes an image file memory portion 141, a workpiece program memory portion 142, and a video tool portion 143. The video tool portion 143 includes tool portions 143a-143m, which determine the GUI, image processing operation, etc., for each of the corresponding tools. The video tool portion 143 also includes a region of interest generator 143x that supports automatic, semi-automatic and/or manual operations that define various regions of interest that are operable in various video tools included in the video tool portion 143. In general, the memory portion 140 stores data usable to operate the vision system components portion 200 to capture or acquire an image of the workpiece 20 such that the acquired image of the workpiece 20 has desired image characteristics. The memory portion 140 further stores data usable to operate the machine vision inspection system 100 to perform various inspection and measurement operations on the acquired images, either manually or automatically, and to output the results through the input/output interface 130. The memory portion 140 also contains data defining a graphical user interface operable through the input/output interface 130.

The signal lines or busses 221, 231 and 241 of the stage light 220, the coaxial light 230, and the surface light 240, respectively, are all connected to the input/output interface 130. The signal line 262 from the camera system 260 and the signal line 296 from the controllable motor 294 are connected to the input/output interface 130. In addition to carrying image data, the signal line 262 may carry a signal from the controller 125 that initiates image acquisition.

One or more display devices 136 and one or more input devices 138 can also be connected to the input/output interface 130. The display devices 136 and input devices 138 can be used to view, create and/or modify part programs, to view the images captured by the camera system 260 and/or to directly control the vision system components portion 200. In a fully automated system having a predefined workpiece program, the display devices 136 and/or the input devices 138 may be omitted.

With regard to the CAD file feature extractor 180, information such as a CAD file representing a workpiece, or a previous image of a substantially identical workpiece, is frequently available in industrial applications of machine vision inspection systems. In the case of a CAD file representation, it should be appreciated that the locations of edges and boundaries in the CAD file representation may be determined manually, in a semi-automated fashion, or fully automatically from a CAD representation, by a variety of known methods of CAD file feature extraction. In such a case, the spatial locations of the corresponding edges and boundaries in a current set of inspection images of a corresponding workpiece may then be determined by a further variety of known manual, semi-automated, or automated methods of spatial congruence and/or feature congruence image processing. These methods may include, for example, coordinate matching, pattern matching, template matching, and the like. For example, such methods are routinely used for the inspection of the positions of edges and boundaries on workpieces in a variety of commercially available machine vision inspection systems, such as the QUICK VISION^{TM} series of vision inspection machines and QVPAK^{TM} software that were discussed above. One exemplary CAD file feature extractor that is commercially available for determining the location of various holes to be inspected in fabricated printed circuit boards is the PAGPAK^{TM} off-line part programming software available from Mitutoyo America Corporation (MAC), located in Aurora, IL. The features of the PAGPAK^{TM} off-line part programming software are described in related documentation which is hereby incorporated herein by reference in its entirety.

The control system portion 120 is usable to determine image acquisition settings and/or acquire an image of the workpiece 20 such that the input image of the workpiece 20 has desired image characteristics in a region of interest that includes a workpiece feature to be inspected. In various exemplary embodiments, when a user uses the machine vision inspection system 100 to create a workpiece image acquisition program for the workpiece 20 according to this invention, the user generates workpiece program instructions either by explicitly coding the instructions automatically, semi-automatically, or manually, using a workpiece programming language, or by generating the instructions by moving the machine vision inspection system 100 through an image acquisition training sequence such that the workpiece program instructions capture the training sequence. In particular, these instructions will cause the machine vision inspection system to manipulate the workpiece stage 210 and/or the camera system 260 such that a particular portion of the workpiece 20 is within the field of view of the camera system 260 and at a desired focus state. This process is repeated for multiple images in a set of images that are to be captured. It should also be appreciated that, prior to capturing each of the images the user will generate workpiece program instructions that select a lens having a desired magnification and that activate one or more of the light sources 220-240 to provide a desired illumination of the workpiece 20 during image acquisition.

For each image in the set of images, in one embodiment, the control system 120 will then command the camera system 260 to capture each image of the workpiece 20 and output the captured images to the control system 120. The control system 120 will then, under control of the controller 125, input the captured images through the input/output interface 130 and store the captured images in the memory 140. The controller 125 may also display the captured images on the display device 136.

Various known image processing or image quality determining video tools can be used for assistance in performing the foregoing operations. A few examples of such tools are variously disclosed in U.S. Patent Application Nos. 09/736,187, 09/921,886, and U.S. Patent No. 6,542,180, each of which is hereby incorporated herein by reference in its entirety.

The control system portion 120 is further usable to inspect workpiece features in such workpiece inspection images, and to store and/or output the inspection results. In various exemplary embodiments, when a user uses the machine vision inspection system 100 to create a workpiece image inspection program for the workpiece 20 according to this invention, the user generates workpiece program instructions either by explicitly coding the instructions automatically, semi-automatically, or manually, using a workpiece programming language, or by generating the instructions by moving the machine vision inspection system 100 through an image recall and inspection training sequence such that the workpiece program instructions capture the training sequence. In particular, these instructions will cause the machine vision inspection system to recall a captured workpiece inspection image stored in image file memory portion of the memory 140 and perform various inspection operations on the image using the capabilities provide by various video tool included in the video tool portion 143 of the memory 140. This process is repeated for multiple images in the set of images that were captured.

For each image in the set of images, in one embodiment, the control system 120 will output the results of each inspection operation to the input/output interface for outputting to various display devices 136, which may include video display, printers, and the like. The control system 120 may also store the results of each inspection operation in the memory 140.

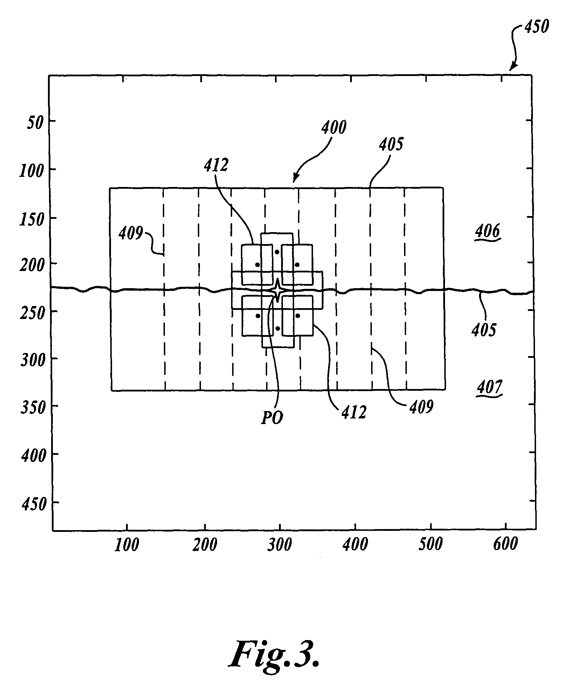

Various known image processing and/or feature analysis or inspection tools may be used may be used for assistance in performing the foregoing operations. Such tools may include, for example, shape or pattern matching tools, edge and/or boundary detection tools, circle and dimension measuring tools, and the like. One example of the use of such video tools in a precision machine vision inspection system according to this invention is described with reference to FIGURE 3, with reference to one exemplary boundary detection tool, disclosed in U.S. Patent Application No. 09/987,986, which is hereby incorporated herein by reference in its entirety.

FIGURE 3 illustrates a feature analysis/inspection tool that determines the location or position of an edge or boundary in a workpiece inspection image. The boundary tool 400 is usable to select an edge or boundary to be located. In particular, the boundary tool 400 performs a relatively complex set of image processing and feature analysis operations suitable for locating boundaries between highly textured regions, or the like. As shown in FIGURE 3 shows a 640 by 480 pixel workpiece inspection image 450 includes a magnified image of a boundary 405 that extends horizontally across the image between two regions 406 and 407 that include different textures (not shown). In practice, a user can define an area-of-interest on the boundary 405, by using a graphical user interface to position the boundary tool 400 on a particular edge or portion of an edge to be detected, as shown in FIGURE 3 for the boundary 405. In this case, the area-of-interest embodies the feature to be inspected in the workpiece inspection image.

The area-of-interest is defined by the region of interest generator 143x based on the data corresponding to the positioned boundary tool 400. The boundary tool 400 includes a box 405 configurable by the user to further refine and determine the area-of-interest. For example, the box may be configured in an arc or circle shape, or in the shape of a rectangle as shown in FIGURE 3. The boundary tool 400 may draw additional tool elements on the workpiece inspection image 450. For example, a point of interest P0 and region-of-interest indicators 412 shown as overlapping identical rectangles 412 in FIGURE 3, may be automatically generated and drawn. After the boundary detection tool 400 has been automatically drawn on the workpiece inspection image 450, in various embodiments the user can refine or adjust the drawn elements such as the point-of-interest P0. The point of interest P0 may be only generally indicative of a point on the boundary, or edge. Moreover, the user can define a spacing between various "scan" lines 409 extending across the boundary in the area of interest, or the spacing can be automatically determined. Thus, operations associated with the boundary detection tool 400 can be manually defined by user input or by an automated process using predefined default characteristics for the boundary tool 400. By allowing the user to select a boundary tool 400 having predefined characteristics, boundary detection operations can be directed by operators having little or no understanding of the underlying mathematical or image processing operations.

The boundary tool 400 then performs a complex series of image analysis and/or image processing operations that compare various image characteristics in the various sets of opposing pairs of the regions of interest 412, to determine a set of image filtering characteristics and a pair of opposing pairs of the regions of interest 412, that most effectively indicate the location of the boundary 405 in the workpiece inspection image 450. These operations are described in detail in the previously incorporated '986 Application.

Additional exemplary tools and methods usable in various exemplary embodiments according to this invention for determining image acquisition settings and for performing image inspection operation are evident in commercial machine vision inspection systems such as the QUICK VISION^{TM} series of vision inspection machines and the associated QVPAK^{TM} software that were discussed above. However, it should be appreciated that any such tools, whether currently available or later developed, can be similarly used to determine image acquisition settings and to later perform image inspection operations, in various exemplary embodiments according to this invention.

As outlined previously, it should be appreciated that if the inspection operations of various video tools, such as the highly complex boundary tool 400, for example, are interspersed with the operation of a workpiece image acquisition program, such as a workpiece image acquisition program determined according to the method outlined above, the image acquisition program will need to be delayed and/or interrupted so that the inspection operations can be carried out on an acquired workpiece image. As previously discussed, this is particularly true considering that the various timings of the limitless number of possible combinations of image processing operations, inspection operations, I/O operations, and computations and the like, that are possible with such flexible systems, are difficult or impossible to control and/or predict. Thus, intermittent stopping and starting of the relative motion between the camera and the stage or workpiece is effectively required for such systems when interspersing intermittent precision inspection operations with precision image acquisition operations, giving rise to all of the previously discussed associated problems. Accordingly, such inspection operations are not interspersed with image acquisition operations in various exemplary embodiments according to this invention. Workpiece inspection image acquisition operations are performed with a timing that is independent of related workpiece image inspection operations according to the principles of this invention.

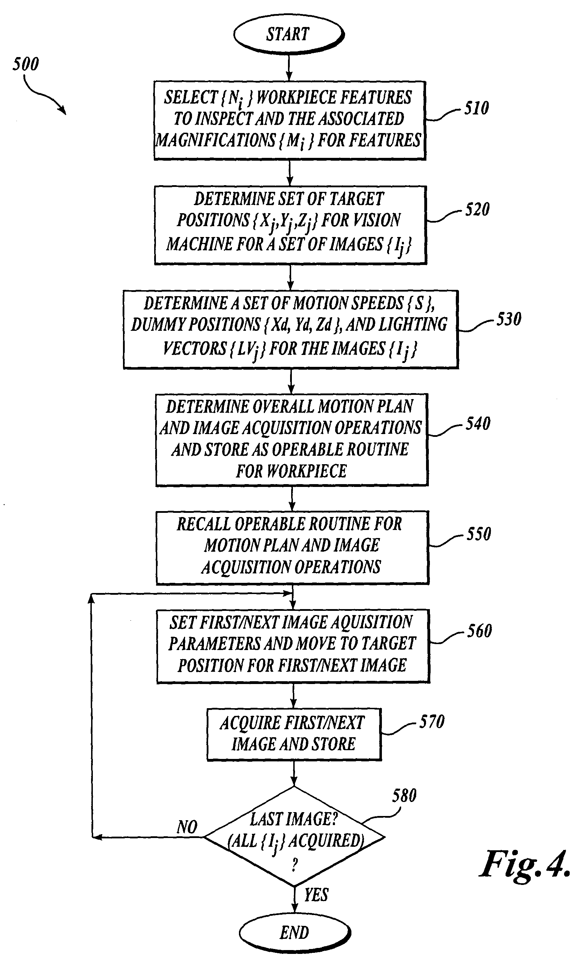

FIGURE 4 is a flow diagram illustrative of one exemplary method of determining a motion path and image acquisition routine 500 that is usable for inspecting a workpiece according to the principles of this invention. At a block 510, a selection is made of a set of (Nᵢ) workpiece features for inspection along with the associated set magnifications (Mᵢ) for the features. As an example, a workpiece could comprise a circuit board, and the features could be selected holes of the circuit board, or any other parts that are to be inspected. The features may thus determine corresponding regions of interest in a corresponding inspection image. The magnifications may be default magnifications which do not change, or may be based on the size of each of the features, or on other factors. Selection of the features and the associated magnifications may be determined automatically, semi-automatically or manually. In one embodiment, the selection of the workpiece features may be done by a CAD preprocessor (e.g., PCB autoinspector) such as the PAGPAK^{TM} software that was discussed above. In other exemplary embodiments, it may be done by graphic or text-based CAD file analysis (e.g., at a terminal), etc.

At a block 520, a set of target positions (Xⱼ, Yⱼ, Zⱼ) is determined for the machine vision inspection machine for a set of workpiece inspection images (Iⱼ). The X and Y coordinates generally designate coordinates corresponding to a location on the workpiece along the directions of the previously described X and Y axes, while the Z coordinate generally designates a height on the workpiece corresponding to the previously described Z axis. In one embodiment, the X and Y target coordinates govern control of the stage position and the Z target coordinate governs control of the optical assembly and camera height. It should be noted that it is generally desirable if several of the workpiece features can be inspected in a single image, if they can be located within a single field and imaged using the same magnification. Thus, in various exemplary embodiments the block 520 includes operations to determine a set of target positions (Xⱼ, Yⱼ, Zⱼ) for the set of workpiece inspection images (Iⱼ) that captures the set of Nᵢ workpiece features with a minimum, or near-minimum number of images. Such operations may be performed automatically, semi-automatically or manually in various exemplary embodiments.

It should be appreciated that in various exemplary embodiments, the motion control system portion of a machine vision inspection system according to this invention includes the capability to determine when the target positions (Xⱼ, Yⱼ, Zⱼ) have been reached and to transmit a related trigger signal to the control system portion. Such motion control systems are commercially available and generally known to one of ordinary skill in the art. Accordingly, such a trigger signal can be used to control one or both of a strobed light source and/or the image acquisition camera, to acquired a workpiece inspection image at a desired target position according to the principles of this invention.

At a block 530, a set of motion speeds (S), dummy positions (Xd, Yd, Zd), and lighting vectors (LVⱼ) are determined for acquiring the set of workpiece inspection images (Iⱼ). The set of motion speeds (S), and any associated acceleration and decelerations near the target points and dummy position, can in various embodiments be set by default, or can be determined according to the accuracy and resolution required for the inspection operations that are to be performed on an image, or according to other relevant factors. In one embodiment, motion speeds and dummy points may be determined by utilizing known numerical control path planning techniques such as those known and/or commercially available for machine tools, coordinate measuring machines, and the like. Alternatively, such operations may be done manually based on the known target positions and machine motion control limitations. For example, if a relatively constant motion speed is used throughout an entire image acquisition sequence, dummy points between the target points may be determined with due consideration to the known acceleration, deceleration and/or curve following limitations of the motion control system portion of the machine vision inspection system, and/or any related default values that may be assumed for the motion control system.

It should be appreciated that the motion speeds operable during the particular moment of the acquisition of an inspection image, in combination with the effective exposure time of the image, as determined by the strobe duration for example, determine the amount of motion blur in the corresponding inspection image. Thus, the motion speeds are generally selected in combination with the corresponding effective exposure times.

The lighting vectors LVⱼ determine in various embodiments which light source is utilized, what the strobe timing is, etc. As noted above, in one embodiment the strobe lighting consists of a high intensity, short duration burst of illumination that effectively "freezes" the workpiece with respect to the camera. In one exemplary embodiment suitable for relatively high precision applications, the light source is strobed with a pulse width such that the workpiece moves a desired maximum amount, or less, during the strobe timing duration. In various exemplary precision measuring embodiments, the desired maximum amount of workpiece motion is on the order of 0.25 microns. For example, a 16.66 microsecond exposure may be utilized at a motion speed of 15 mm per second.

In various exemplary embodiments, a light power level may be advantageously set at a level that corresponds to approximately 70-80% of the response range of the camera for the pixels in the area proximate to the desired inspection feature in a corresponding inspection image. However, it should be appreciated that this range is exemplary only, and not limiting. In general, the level is set at any level that best enhances the image inspection operations to be performed on the image. In various exemplary embodiments, an LED light source is driven at approximately its maximum allowable power level because this will generally result in the shortest allowable strobe "exposure time" corresponding to a desired image intensity level, which in turn results in the clearest possible inspection image taken during continuous motion. In various exemplary embodiments, the light source that is used for strobing includes a high intensity LED, such as one of the LEDs in the Luxeon^{TM} product line, available from Lumileds Lighting, LLC, of San Jose, California. In one exemplary embodiment, the light source that is used for strobing may include a blue LED with a wavelength of approximately 470 nm. However, any wavelength within the sensing range of the camera can be used in various exemplary embodiments. For example, any of the previously described light sources 220-240 may be implemented using such an LED.

With regard to the lighting vectors LVⱼ, in one exemplary embodiment according to this invention, a particular application includes workpiece features to be inspected that are exclusively the edges of through-holes, hereafter referred to simply as "holes" and/or "outer" edges that have no additional workpiece material below them, that is, in the direction toward the workpiece stage. In such cases, when the lighting source is placed behind the holes, for example when the stage light 220 is used, and the relevant image contrast for the features to be inspected is thus determined primarily by the light that passes through the holes, or along the outer edges, in contrast to the non-illuminated adjacent surfaces of the feature to be inspected, then the generally unknown or variable reflectivity of the adjacent surfaces of a workpiece is essentially no longer a concern for such inspection images. Accordingly, for a given stage lighting level behind such a hole or outer edge, the light intensity that will be received in the resulting images is relatively well known based on known characteristics of the machine vision inspection system. Therefore, all of the lighting vectors in such cases may be set to the same appropriate default value. In various exemplary embodiments, for such cases a stage light level may be advantageously set at a level that corresponds to approximately 70-80% of the response range of the camera of the machine vision inspection system.

It should be appreciated that in such cases, a set of inspection routines for a workpiece can be determined entirely automatically and based entirely on a CAD representation of the workpiece, according to the principles of this invention. In one such exemplary application, the workpiece is a printed circuit board and the printed circuit board holes to be inspected are identified automatically.

However, more generally, the reflectivity of the workpiece features that are being inspected affects the lighting vectors with regard to the light source and strobe time, such that the lighting vectors must be individually determined at block 530. For example, the lighting vectors may be established by initial experimental trials and and/or analysis, that result in acceptable workpiece inspection images for representative workpieces and/or workpiece properties.

At a block 540, an overall motion plan and image acquisition operations routine is determined and stored as part of an operable inspection image acquisition routine for the workpiece. That is, the interrelationship and sequence of all of the parameters, operations, events, and triggers determined in the steps 510-530, for example as generally described above, are determined and stored as an operable set of machine control instructions usable by the machine vision inspection system for acquiring the desired set of workpiece inspection images for the corresponding workpiece.

At a block 550, the routine recalls the operable routine for the motion plan and image acquisition operations. It will be appreciated that in some embodiments the storing of the routine at block 540 and the recalling of the routine at block 550 may be eliminated, or merged and indistinguishable. In other words, once the routine is determined at block 540, the initiation of the routine may simply be executed, rather than it being stored at block 540, and then being recalled at block 550.

At a block 560, the routine sets the first image acquisition parameters, that is the magnification, lighting vector, and the like and moves to, or through, the target position for the first image. At a block 570, the routine acquires the first image at the corresponding target position and stores it. At a decision block 580, the routine determines whether the last image has been acquired (i.e., whether all of the images Iⱼ have been acquired). If the last image has not yet been acquired, then the routine returns to block 560, where the routine sets the next image acquisition parameters and moves to, or through, the target position for the next image. If at decision block 580 the last image has been acquired, then the routine ends.

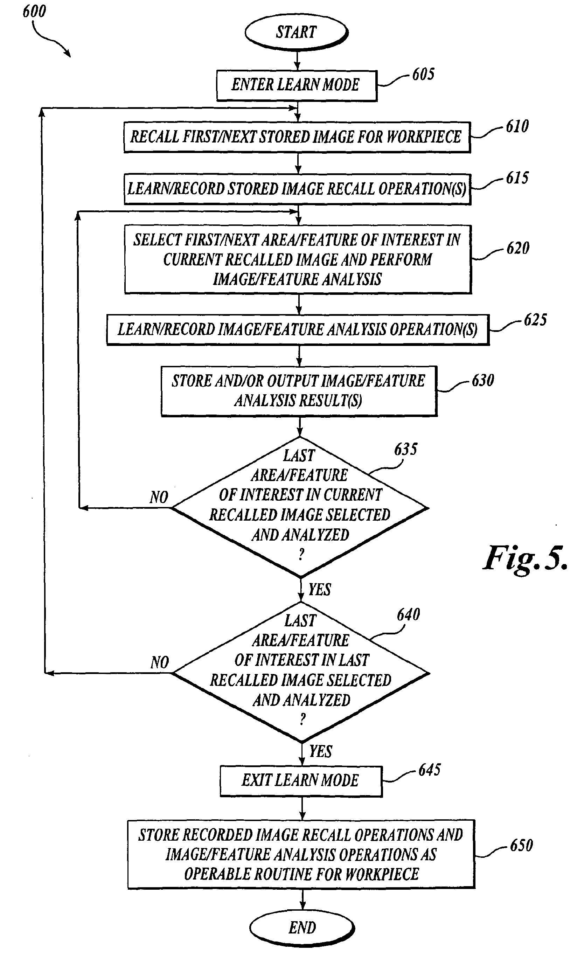

FIGURE 5 is a flow diagram illustrating a routine 600 for recalling and analyzing an inspection image set for a workpiece. In various exemplary embodiments, the inspection image set is acquired and stored approximately according to the routine 500, as previously described. At a block 605, a learning mode is entered. At a block 610, the first/next stored image for the workpiece is recalled. At a block 615, the stored image recall operations are learned/recorded.

At a block 620, the first/next area or feature of interest, or the like, corresponding to the first/next one of the set of (Nᵢ) workpiece features to be inspected in the current image is located and any desired image and/or feature processing and analysis is performed at that location. As an example, the location might correspond to a portion of the image including a hole, and the diameter of the hole might be determined using an appropriate video tool. As a further example, the location might correspond to a portion of the image including a boundary having a location or position that is to be determined, for example using the boundary tool 400, previously discussed with reference to FIGURE 3. Regardless of the specific operations to be performed at the location in the workpiece inspection image, at a block 625, the related image analysis operations are learned/recorded. Then, at a block 630, the image analysis results corresponding to the feature(s) at the location analyzed and/or inspected in step 620 are stored and/or outputted.

At a decision block 635, a determination is made as to whether the last area or feature of interest in the current recalled image has been selected and analyzed. If the last area or feature of interest has not yet been analyzed, then the routine returns to block 620, where the next area or feature of interest is selected. If the last area or feature of interest has been analyzed, then the routine continues to a decision block 640.

At decision block 640, a determination is made as to whether the last recalled workpiece inspection image has been selected and analyzed. If the last recalled workpiece inspection image has not yet been analyzed, then the routine returns to block 610, where the next stored workpiece inspection image for the workpiece is recalled. If the last recalled workpiece inspection image has been analyzed, then the routine continues to a block 645. At block 645, the learning mode is exited. At a block 650, all of the recorded image recall operations and image analysis operations are stored as an operable routine for inspecting a corresponding workpiece.

It will be appreciated that the routines 500 and 600 essentially comprise a training mode that is required in order to be able to automatically inspect a workpiece at high speed. In essence, creating or "training" the routine 500 involves learning to take images of an inspection workpiece that include all of the required workpiece features to be inspected, and storing that routine for subsequent use on corresponding workpieces. Subsequently, that routine is executed to acquire an initial or "training" set of inspection images of a corresponding workpiece.

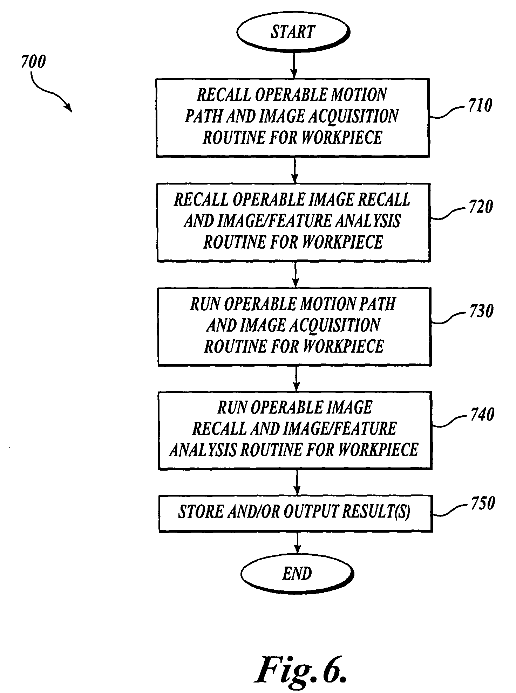

In essence, creating or "training" the routine 600 involves recalling the initial set of inspection images. Then, the recalled initial set of images is used for initially learning or "training" a set of image inspection operations that inspect the set of workpiece inspection images in all of the required places. That image inspection routine is then stored for subsequent use on various other sets of inspection images for corresponding workpieces. As will be described in more detail below with reference to FIGURE 6, once the training mode is completed, then the inspection of multiple additional corresponding workpieces may be performed.

FIGURE 6 is a flow diagram illustrative of a routine 700 for acquiring and inspecting images of workpieces, as a means of inspecting the corresponding physical workpiece. At a block 710, the motion path and image acquisition routine for the workpiece is recalled (as was stored during the routine 500). At a block 720, the image recall and analysis routine for the workpiece is recalled (as was stored during the routine 600). At a block 730, the operable motion path and image acquisition routine for the workpiece is run. At a block 740, the operable image recall and image/feature analysis routine for the workpiece is run. At a block 750, the results are stored and/or output. It will be appreciated that in various other embodiments of the routine 700 for acquiring and inspecting images of workpieces, the blocks 710 and 730 may be combined and/or executed sequentially prior to execution of the blocks 720 and 740, which may also be combined and/or executed sequentially. In various other exemplary embodiments, the respective routines 500 and 600 are executed as subroutines run sequentially in the routine 700. In various other exemplary embodiments, the respective routines 500 and 600 are combined sequentially in a single routine 700.

In various other exemplary embodiments, the routine 700 includes a critical delay for the image recall and analysis routine 600. As previously disclosed, in such embodiments execution of the image recall and analysis routine 600 is delayed in the routine 700 until a sufficient portion of the motion path and image acquisition routine 500 has been executed, such that a sufficient number of workpiece inspection images have been acquired and stored and that it is relatively certain that additional operations of the motion path and image acquisition routine 500 will be completed before the image recall and analysis routine 600 will request the associated images. As previously disclosed, the critical delay for the image recall and analysis routine 600 in the routine 700 can be determined or known based on trial runs of the routines 500, 600 and/or 700, or on the known characteristics of a system controller and/or host operating system of a machine vision inspection system that executes the routine 700. In such an embodiment of the routine 700, the two routines 500 and 600 may thus run partially concurrently, and at least the motion path and image acquisition routine will still have a timing that is independent of the timing of related image inspection operations for the workpiece, according to the principles of this invention.

It should be appreciated that in various exemplary embodiments according to this invention that use a strobe lighting capability, the relative position between the camera and stage or workpiece that corresponds to the workpiece inspection images must be known to the required precision. In general, this requires that the position values that are tracked in the motion control interface 132 of the control system portion 120 along the previously discussed X, Y and Z axes, must be latched at the nominal time of the exposure of the corresponding image, and stored in relation to that image. Accordingly, when continuous motion is used during workpiece image acquisition, it is advantageous to both trigger the strobe lighting and latch the corresponding position values at a specific time in relation to the strobe lighting duration, all initiated at the moment that the system configuration corresponds to an image target point. Image target points were discussed in detail above, with reference to FIGURE 4. Various considerations related to typical vision system components in relation to high speed imaging, imaging moving objects, synchronization issues, and the like, are discussed in detail in "High Speed, Real-Time Machine Vision", by Perry C. West, Automated Vision Systems Inc., www.autovis.com, 2001, commissioned by CyberOptics-Imagenation, www.imagenation.com, which is hereby incorporated by reference in its entirety.

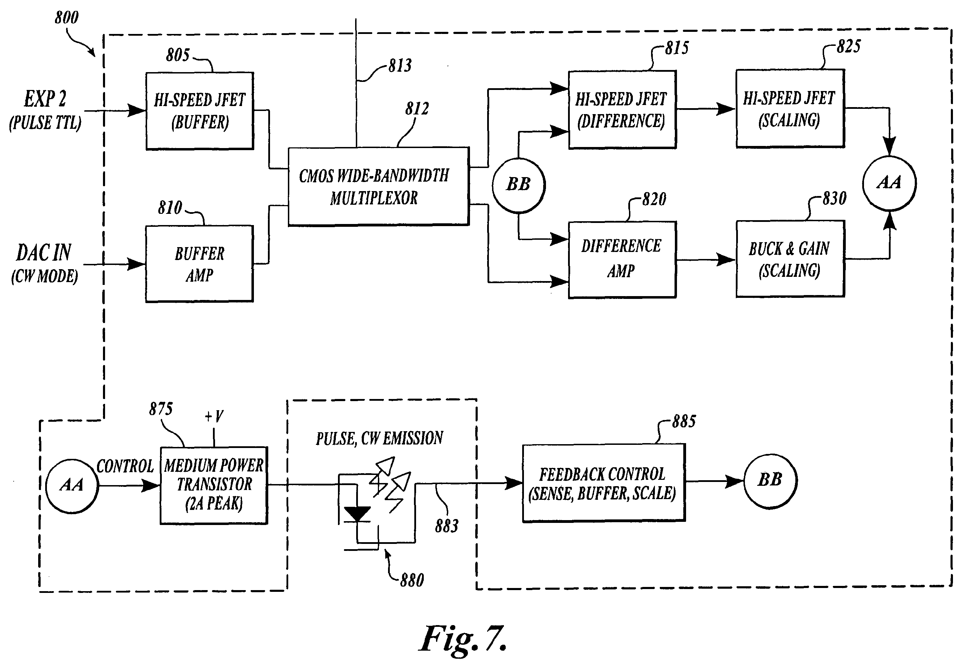

In one exemplary embodiment, the motion control interface 132 includes a Galil motion control card #DMC-1730, commercially available from Galil Motion Control, Inc., of Rocklin, CA, or a motion card having similar and sufficient capabilities for the purposes of this invention; the imaging control interface 131 includes a Matrox Corona II frame grabber, commercially available from Matrox Electronic Systems Ltd., of Quebec, Canada, or a frame grabber card having similar and sufficient capabilities for the purposes of this invention; and the camera system 260 includes a progressive scan CCD camera JAI CV-M40, commercially available from JAI, of Copenhagen, Denmark, or a CCD camera having similar and sufficient capabilities for the purposes of this invention. Such components are usable in combination with various strobe light controllers. One exemplary strobe light control configuration 800 is described with reference to FIGURE 7.

FIGURE 7 is a schematic block diagram of one exemplary strobe light control configuration 800 usable in various exemplary embodiments according to this invention. A circuit corresponding to the strobe light control configuration 800 may be implemented using generally known conventional circuit elements and conventional circuit design techniques, according to the following description. In one exemplary embodiment, the components of the strobe light control configuration 800 are selected to provide a high-speed, feedback-controlled current driver capable of operating a current source for a light source such as an LED, or diode laser, or the like, at rates as high as 5 MHz. In various exemplary embodiments, the components are selected to provide an induced phase delay that is approximately 1 microsecond or less. That is, the strobe pulse is initiated within approximately 1 microsecond after receiving the leading edge of the input control signal EXP2. In various exemplary embodiments, the components are selected to provide peak currents as high as approximately 1.5 A for a strobe mode strobe duration as short as 500 nsec and as long as 40 msec.

As shown in FIGURE 7, strobe light control configuration 800 includes a light source 880 capable of providing high intensity illumination. In various exemplary embodiments, the light source 880 includes an LED, as previously discussed. The light source 880 is usable for any of the light sources 220-240 described with reference to FIGURE 2, for example. A fast-response medium power transistor 875, capable of providing approximately 1.5A of current (2A peak), is connected to drive the light source 880 according to a control signal AA provided as described below. The light source 880 includes means for providing a feedback control signal 883 that corresponds to the output power of the light source 880. In various exemplary embodiments, the feedback control signal 883 may comprise a portion of the light from the light source 880. The feedback control signal 883 is provided to a buffer circuit portion 885, that senses and/or amplifies or scales the feedback control signal 883 in various exemplary embodiments to provide the feedback control signal BB.

The strobe light control configuration 800 may be operated in two separate modes. In the strobe mode, a control signal EXP 2 is input to a high speed JFET input buffer 805. The signal EXP 2 comes from the frame grabber, as described in #4 and #5, below. A CMOS multiplexer 812 is controlled by an appropriate strobe mode enabling signal(s) from the control system portion 120 over the signal line(s) 813 to route the control signal EXP 2 to a high speed JFET difference amplifier 815. The JFET difference amplifier 815 also receives the feedback control signal BB from the buffer circuit portion 885. A difference signal is output by the JFET difference amplifier 815 to a high speed JFET amplifier 825 that amplifies or scales the difference signal in various exemplary embodiments to provide the control signal AA that is input to the medium power transistor 875 that drives the light source 880.

In the strobe mode, a control signal EXP 2 is input to a high speed JFET input buffer 805. The signal EXP 2 comes from the framegrabber, as described in #5, below. A CMOS multiplexer 812 is controlled by an appropriate strobe mode enabling signal(s) from the control system portion 120 over the signal line(s) 813 to route the control signal EXP 2 to a high speed JFET difference amplifier 815. The JFET difference amplifier 815 also receives the feedback control signal BB from the buffer circuit portion 885. A difference signal is output by the JFET difference amplifier 815 to a high speed JFET amplifier 825 that amplifies or scales the difference signal in various exemplary embodiments to provide the control signal AA that is input to the medium power transistor 875 that drives the light source 880.

In a continuous illumination mode, a control signal DAC IN is input to an input buffer 810. The signal DAC IN comes from the light control interface 133 of the control system portion 120. The CMOS multiplexer 812 is controlled by an appropriate continuous illumination mode enabling signal(s) from the control system portion 120 over the signal line(s) 813 to route the control signal DAC IN to a difference amplifier 820. The difference amplifier 820 also receives the feedback control signal BB from the buffer circuit portion 885. A difference signal is output by the difference amplifier 820 to an amplifier 830 that amplifies or scales the difference signal in various exemplary embodiments to provide the control signal AA that is input to the medium power transistor 875 that drives the light source 880 in the continuous illumination mode. In the continuous illumination mode, the control signal AA is controlled below a maximum level that controls the current in the medium power transistor 875 and light source 880 at a level that provides a long operating life for those components.

By having two such separate operating modes, the strobe light control configuration 800 is ideal for retrofit applications, and other applications, when it is desired to operate a precision machine vision inspection system using both systems and methods according to this invention, as well as conventional systems and methods that use relatively continuous illumination that is typically controlled by a signal such as the signal DAC IN.

In order to both trigger the strobe lighting and latch the corresponding position values at a specific time in relation to the strobe lighting duration, all initiated at the moment that the system configuration corresponds to an image target point, these system elements described above are operably interconnected, and operated as follows when the strobe mode is in operation:
1. A target point position (Xj,Yj,Zj) from a target point set, determined in the routine 500, for example, is compared to the actual stage position (X,Y,Z) as determined by polling the positions of all position encoders connected to the motion control card simultaneously at a high frequency, using inherent capabilities of the motion control card and the control system portion 120. When the target and actual positions agree within a certain tolerance, the motion control card issues a hard-wired trigger signal output using inherent capabilities of the motion control card.
2. This output trigger signal is connected directly into the system framegrabber, which is operated in an externally triggered mode enabled by the control system portion 120 when the strobe lighting mode is in operation.
3. The framegrabber then issues a first signal that initiates an asynchronous reset of the system camera. This initiates the image integration sequence on the camera, all according to inherent capabilities of those system components.
4. After a brief predetermined fixed delay which is programmed into the framegrabber and that is established based on various known characteristics of the vision system components, such as, for example, the camera integration time, the speed of the stage, and various inherent circuit delays, the frame grabber then outputs a second control signal (EXP 2) having a predetermined duration corresponding to a predetermined exposure time. The predetermined duration is programmed into the framegrabber using inherent capabilities of the framegrabber and the control system portion 120. The second control signal (EXP 2) having the predetermined duration is input to a circuit implementing the strobe light control configuration 800 to initiate a light pulse corresponding to the predetermined duration. In one exemplary embodiment, the second control signal (EXP 2) controls both the power level and the duration in the strobe light control configuration 800. In various other exemplary embodiments, the second control signal (EXP 2) may simply control the duration in the strobe light control configuration 800, while the light source 880 is driven according to a fixed or default power level. In general, the strobe light power level and pulse durations are determined in combination with the predetermined relative motion velocity and various other factors that influence the image characteristics, as previously discussed.
5. The framegrabber output second control signal (EXP 2) to the lighting controller is also connected directly to the motion control card's high-speed position capture latch input, which may be triggered by the rising edge, or start of the second control signal (EXP 2). In response, the motion control card latches the current (X,Y,Z) position values, so that they may be acquired and stored by the control system portion 120 in relation to the corresponding workpiece inspection image, for later retrieval and analysis.
6. The frame grabber captures the resultant video data from the camera output after the asynchronous reset signal is delivered, so that the data, that is, the workpiece inspection image, may be acquired and stored by the control system portion 120 in relation to the corresponding (X,Y,Z) position values, for later retrieval and analysis. The effective image exposure time is, of course, controlled by the duration of the strobe pulse at a predetermined time during the integration sequence on the camera.
7. The control system portion 120 stores the corresponding images in relation to the corresponding (X,Y, Z) positions for subsequent analysis.

It should be appreciated that workpiece inspection images acquired according to the method described above can be provided with far shorter exposure times, and at a far higher rate of image acquisition (for a series of images), than is possible with the components and methods used in conventional precision machine vision inspection systems. It should also be appreciated that when an extended workpiece feature, or a series of adjacent workpiece features is/are to be imaged and inspected at high magnification, using continuous motion according to the principles of this invention, each highly magnified field of view is a very small field of view that is traversed and passed by very quickly. Accordingly, the short exposure times, and high image acquisition rates provided by the methods described above are particularly important for acquiring highly magnified precision workpiece inspection images with increased throughput.

It should be appreciated that although the synchronization operations previously described make use of the inherent features of various exemplary system components, in various other exemplary embodiments similar synchronization features and/or signals may be provided by a separate timing circuit implemented according to known digital timing circuit techniques. Such a circuit may be included as a portion of the control system portion 120, in various exemplary embodiments.

It should be appreciated that certain existing machine vision inspection systems can employ various embodiments of the systems and methods according to this invention with minimal or no "retrofit" modifications to such existing machines, and the throughput of such machines may still be increased according to the principles of this invention. In various exemplary embodiments, only the addition of machine vision inspection software methods and/or modifications according to the principles of this invention are included in the retrofit modifications. In particular, this approach is feasible for systems which include a camera providing relatively short shutter or exposure times, and/or that already include a strobe lighting capability. In various other exemplary embodiments, only lighting system modifications related to providing a previously absent strobe lighting capability according to the principles of this invention are included in the retrofit modifications.

It should also be appreciated that particularly in the case of the applications described herein where the workpiece features to be inspected are exclusively the edges of through-holes, and/or "outer" edges that have no additional workpiece material below them, a complete routine (or set of routines) for inspecting such a workpiece can be determined entirely automatically and based entirely on a CAD representation of a workpiece, according to the principles of this invention. In one such exemplary application, the workpiece is a printed circuit board and the printed circuit board holes to be inspected are identified automatically, for example using the PAGPAK^{TM} off-line part programming software discussed above, and the various machine parameters for acquiring the required set of inspection images may be determined according to the various specific exemplary parameters outlined above. Well known commercially available video tools may be selected for the inspection operations, and corresponding operable tool parameters may be determined based on general or specific experience and knowledge to the machine vision inspection system that will run the inspection operations.

While preferred and exemplary embodiments of the invention have been illustrated and described, it will be appreciated that various changes can be made therein according to the principles of this invention without departing from the spirit and scope of the invention.

## Claims

1. A method for programming a precision machine vision inspection system for inspecting a workpiece, the precision machine vision inspection system comprising an image acquisition system comprising at least a camera; at least one light source; a workpiece stage; at least one position sensor; and a control system portion, wherein at least one of the workpiece stage and the camera is movable to provide relative motion with respect to the other, the method comprising;
determining a set of target positions for an image set of workpiece inspection images, the image set including the workpiece features to be inspected;
determining a set of respective image acquisition parameters for each respective image of the image set; and
determining an image acquisition routine comprising a set of machine control instructions for acquiring and storing the image set of workpiece inspection images, the machine control instructions of the image acquisition routine comprising motion control instructions and image acquisition instructions based at least partially on the determined set of target positions and the determined set of respective image acquisition parameters;
wherein:
the machine control instructions of the image acquisition routine are operable to acquire and store at least a plurality of the images of the image set without performing image inspection operations while performing the machine control instructions that acquire and store the at least a plurality of images of the image set.

2. The method of claim 1, wherein the at least a plurality of images of the image set comprises all the images of the image set.

3. The method of claim 1, wherein determining the set of target positions for the image set comprises:
selecting the workpiece features to be inspected; and
determining a respective image magnification for each respective workpiece feature; and determining at least one of the target positions such that at least two workpiece features having the same respective image magnification can be imaged in a single workpiece inspection image at that target location.

4. The method of claim 3, wherein determining the respective image magnification for each respective workpiece feature comprises using a default magnification that is the same for at least some of the workpiece features to be inspected.

5. The method of claim 1, wherein:
for each image of the at least a plurality of images of the image set, the set of respective image acquisition parameters comprises a strobe duration time that determines an effective exposure time for the respective image of the image set.

6. The method of claim 5, wherein the motion control instructions of the image acquisition routine provide continuous motion at least during each respective strobe duration time corresponding to one of the at least a plurality of images of the image set.

7. The method of claim 6, wherein for each respective image of the at least a plurality of images, the relative motion during the respective strobe duration time is less than 25 micrometers.

8. The method of claim 7, wherein the relative motion is less than 10 micrometers.

9. The method of claim 8, wherein the relative motion is less than 5 micrometers.

10. The method of claim 9, wherein the relative motion is less than 1 micrometer.

11. The method of claim 1, further comprising:
executing the image acquisition routine for a workpiece;
recalling the stored images of the image set for that workpiece; and
determining an image inspection routine for the workpiece features to be inspected based on the recalled stored images and storing the image inspection routine.

12. The method of claim 11 comprising:
executing the image acquisition routine for a similar workpiece;
recalling the stored images of the image set for that similar workpiece;
recalling the image inspection routine for that similar workpiece; and
inspecting the similar workpiece using the recalled image acquisition routine and the recalled image inspection routine.
